# EUROPEAN PATENT APPLICATION

(11) **EP 2 913 475 A1**
(43) Date of publication of application: **02.09.2015**
(21) Application number: 14157310.5
(22) Date of filing: 28.02.2014
(51) Int. Cl.: E21C 41/26, G06Q 99/00

(54) **A method for blending stockyard material resources**

(71) Applicant: Siemens Aktiengesellschaft, 80333 München (DE)
(72) Inventor: Das, Saptarshi, 560102 Bangalore (IN); R, Karthik, 560100 Banglaore (IN)

(57) **Abstract**

The present invention discloses a method for planning stockyard material resource blending in a plant in an automated, practical and an effective manner to achieve a blend according to the user requirements. The method comprises a step of collecting the user requirement, a step of assessing stockyard material information, a step of receiving a plant configuration input, a step of estimating if the blend is possible based on the user requirement, the stockyard material information and the plant configuration input by applying one or more blend rules and finally a step of scheduling reclamation of the stockyard material resources to achieve said blend if the blend is possible. In the event that the blend according to the user requirement is not possible, the method further comprises a step of offering a compromised blend by relaxing the user requirement if the user requirement is not strict.

## Description

The present invention relates to a method for planning a blend for stockyard material resources and more particularly to an efficient, practical and an automated method for planning a blend for stockyard material resources in a plant in order to achieve a blend which meets user requirements.

A stockyard is a place where bulk quantities of a material resource can be stocked, such as mined materials like iron ore, coal etc. A plant can host one or more such stockyards. A basic unit volume of the stockyard material resource can be identified as a material block. Typically, stockyard material resources are non-homogeneous in nature, in other words a single stockyard can have materials of same type, such as coal or iron ore, but of different quality or grade. For example, coal from one part of the stockyard can have an ash content of 30% whereas coal from another part of the same stockyard can have an ash content of 50%.

Normally the quality of such3 naturally occurring non-homogenous stockyard materials does not meet the user requirement as it does not match with the desired quality. Just like there are several parameters by which the quality of any mined material is measured, the quality of stockyard material resource can also be defined by one or more quality parameters. These parameters vary from material to material, and also between materials from different mines or stockyards. For example, quality parameters for coal are calorific value, ash content, sulfur content, moisture content etc. Simila rly, quality parameters associated with iron ore are iron content, moisture, silicon dioxide, phosphorous, size of grains etc.

When two or more stockyard material resources of same type of material but having different quality parameters are mixed or blended, the resultant quality parameters are calculated using a specified blend rule. There may be different blend rules that can be applied and these blend rules are not fixed and vary between parameters and between mines or stockyards. One such rule of combination is the "arithmetic average" rule, but there are several other blend rules as well that can be used, for example "max win" blend rule. In "max win" blend rule the resultant quality parameter is the maximum of all the parameters among the blended materials.

Blending of stockyard material resources is being done using forward planning process today. In forward planning, blocks of stockyard material resources are selected and the resultant quality parameter of the material is estimated. Typically different rules of blending for different quality parameters are used. If the resultant quality of the material matches with the required quality which is desired by the user, then the problem is considered solved, otherwise the steps are repeated. This method of coming up with a blend tha t satisfies the user requirement is not deterministic, several attempts are required to arrive at the correct blend. If the blend is not feasible, then there is no systematic way to detect so and the steps are carried on repeatedly on a hit and trial basis. Most commonly used blend rule in such a forward planning process is the arithmetic average rule.

Another method being used for estimating a blend result for stockyard material resources is the arithmetic average based backward planning method. In case the resultant quality parameters are estimated as a weighted average of the quality parameters of the contributing stockyard material resources, the backward blend planning problem can be expressed as a linear programming problem. Prior art exists where backward planning problem is regarded as a linear programming problem. There is also prior art available on coal blending under uncertainty in material quality.

However, none of the known methods for backward planning consider any other blend rule apart from the arithmetic average. Also none of the available methods disclose a deterministic and definite blending solution which can be achieved in a quick and reliable manner.

There is a need for a deterministic and automated stockyard material resource blend planning method which provides a blending result which matches the user requirements using any one or more of the suitable blend rules.

The object of the present invention is to provide a stockyard material resource blending method to come up with a blend that satisfies the user requirement in a quick, automated and a deterministic way.

The object of the invention is achieved by a method for planning a blend for stockyard material resources in a plant according to a user requirement. The method comprises the steps of collecting the user requirement, assessing stockyard material information, receiving a plant configuration input, estimating if the blend is possible based on the user requirement, the stockyard material information and the plant configuration input by applying one or more blend rules, scheduling reclamation of the stockyard material resources to achieve said blend if the blend is possible.

This method comprises a systematic way of collecting the inputs, namely, the user requirements, the stockyard material information about the available resources and the plant configuration, and using one or more of the blend rules together with the inputs arrives at a blend that satisfies the user requirement.

According to one embodiment of the invention, the user requirement comprises at least one desired quality parameter value and a desired quantity of the stockyard material resources. This enables a user to provide his specific and exact needs so that the resultant blend achieved by the method exactly matches with the desired requirements of the user. For a particular blend, each of the user requirements can be stated in terms of the quality parameter values and the total tonnage or quantity of the material resource required. For example, a user requirement is 20000 MT of material quantity and "average calorific value should be greater than 12 kJ/MT". Thus the name of the quality parameter "calorific value in KJ/MT", a corresponding parameter value, i.e. 12 in this case, and the relation "greater than equal to" (>=) needs to be provided by the user. Similarly all other re quirements can be set. Corresponding to each of the parameter, the blend rule can also be set. The list of possible blend rules is given in the table below. User can also set whether the requirement is strict or not. This means that a user can denote whether a particular user requirement is flexible and can be slightly modified to achieve a compromised blend result or is the particular user requirement crucial and strict and hence cannot be relaxed or modified. A sample user requirement for coal blending is shown in the table below.

**Table 1: Sample user requirement table for coal blending**

| Requirement Name | Quality Parameter | Relation | Value | Blend Rule | Strict (Yes/No) |
|---|---|---|---|---|---|
| Quantity | Tonnage (MT) | = | 20000 | Arithmetic Average | Yes |
| Calorific Upper | Calorific Value (kJ/MT) | <= | 15 | Arithmetic Average | No |
| Calorofic Lower | Calorific Value (kJ/MT) | >= | 12 | Arithmetic Average | Yes |
| Ash Content | Ash (in %) | <= | 30 | Higher value wins | Yes |
| Sulfur Content | Sulfur (in %) | <= | 0.1 | Value of bigger material block wins | |

In Table 1 the first column displays the name of the user requirement, the second column displays the quality parameter and its unit on which the requirement is set, the third column shows the relation operator, the fourth column specifies the value of each quality parameter specified by user as the requirement, the fifth column lists the blend rule to be applied and the last column identifies the requirements which are strict and those which are flexible for achieving a particular blend result.

Some standard blend rules that are used to estimate the resulting value of the quality parameters after blending are described here as examples.

In "arithmetic average" blend rule, the resultant parameter value is the weighted average of the parameter values of the contributing material blocks.

In "higher-value-wins" blend rule the resultant parameter value is the largest of the parameter values across all the contributing material blocks.

In "lower-value-wins" blend rule the resultant parameter value is the smallest of the parameter values across all the con tributing material blocks.

In "Boolean-AND" blend rule the resulting parameter value is true only if all the parameter values across the contributing blocks are true.

In "Boolean-OR" blend rule the resulting parameter value is true if at least one parameter value across the contributing blocks is true.

In "value-of-bigger-material-block-wins" blend rule the resulting parameter value is the parameter value corresponding to the largest contributing material block in the blending process.

In "value-of-smaller-material-block-wins" blend rule the resulting parameter value is the parameter value corresponding to the smallest contributing material bock in the blendin g process.

The above mentioned blend rules can be implemented in a strai ght forward way in case of forward blending.

That is when the blending blocks are selected, and the result ing quality parameter values are required to be estimated.

On the other hand, the use of all these blend rules for resul tant quality parameter value estimation is not straight forward in case of backward blend planning, i.e. when the required resultant quality using different blend rules are given, and the material blocks/resources that need to be blended need to be identified such that the resultant quality is achieved. Use of arithmetic average for backward planning is straightforward, and has been extensivly discussed in operation research literature. It is very easy to see that if the blend rule is arithmetic average rule then the backward planning problem can be expressed as a linear programming problem

However in the disclosed invention not only the arithmetic average rule but all the other blend rules can be expressed in terms of an equivalent mixed integer linear programming optimization problem.

In another embodiment, the stockyard material information comprises available stockyard material resource information, quantity information, quality parameter value information, location information and dependency information for the stockyard material resources. Such material resource information will help to locate the desired material resources and arrive at a blend which will meet user requirement. Using such critical information in the backward blending process helps in achieving better blend results in shorter time.

In the simplest form, the stockyard material resources can be described in terms of their availability, the available tonnage per resource, the corresponding quality parameter values, the location of the materials in the stockyard and the dependency of each material resource on the neighboring material resources. All these together form the stockyard material resource information. Further information, like quality parameter variability, credibility of quality information can also be set.

The dependency information includes information about the dependency of each material resource block on the neighboring material blocks for reclamation. For example, if there is a block of material below another, then the first material block lying below cannot be reclaimed before the second one which is lying above the first block. Thus the first resource should contain the second resource in its list of dependencie s. This consideration makes the proposed method practical for implementation.

According to yet another embodiment the plant configuration input comprises a minimum reclaimable quantity of the stockyard material resources by a reclaimer and a location of the reclaimer with respect to the stockyard. The restrictions or limitations imposed by the plant configurations can make the solutions of the disclosed method realistic and readily applicable. The plant configuration input includes the two key information, first, the minimum reclaimable volume or tonnage that can be reclaimed by a reclaimer below which it is not economical to reclaim and second, a location of the reclaimer with respect to the stockyard or the plant. The location of the reclaimer imposes dependencies between the material blocks that need to be reclaimed. F or example, material blocks closer to the reclaimer are easier to reclaim as compared to material blocks which are further away from the reclaimer. This information about the reclaimer location will enable the method to arrive at a blend which not only meets the user requirement but also saves reclamation efforts, time and cost. The reclaimer location information can be provided in terms of coordinates keeping the stockyard dimensions in mind. For example a stockyard having a length, breadth and height corresponding to an X, Y and Z axis can have the location information of the reclaimer in the form of coordinates x, y and z.

In one embodiment of the method, if the blend is not possible in accordance with the user requirements, the method also comprises a step of relaxing the user requirement to achieve a compromised blend. By relaxing the user requirements it is meant that the user requirements are marginally changed so that a blend which is very close to the initial desired blend is achieved. The user can identify certain user requirements as strict which cannot be relaxed and certain user requirements as not strict which can be relaxed. For example, a user requirement states that material resource must have a calorific value of 15kJ/MT which is a strict requirement and an ash content of 30% which is not a strict requirement and is flexible between 20-40%. Now a successful blend is achieved even if the calorific value of the material resource is 15kJ/MT and ash content is 40% even though the original user requirement has not been met strictly. This final adjusted blend is called as a compromised blend. This ensures that the method tries to achieve the best possible blend which meets the user requirements as closely as possible even in the event that the available material resources do not strictly meet the user requirements.

In yet another embodiment, the blend rule further comprises an optimization criteria. For example, minimizing reclamation effort, reclaiming old stockyard material first, minimizing cost etc. can be fed as optimization criteria together with the blend rule to achieve a blend. The optimization criteria when taken together with the quality requirement as provided by the user will give an output to the user that is most desirable and optimized.

In yet another embodiment, the method comprises a step of displaying a blend result to the user. This enables a user to view the blending ratios and accordingly make changes to the inputs to achieve a more desirable blend.

According to one embodiment of the invention, if the proposed method does not find a blend that matches with the user requirement, then it also considers the resources that can be sourced from outside the plant and shows to the user the required inventory in order to meet the user requirements.

The stockyard material resources can be divided into two main groups, first the available resources within the plant, including any scheduled incoming resources, and second the material resources that can be sourced from outside the plant if required.

When the blend is not possible from the available stockyard material resources, the method displays a list of the material resources that need to be sourced from outside the stockyard in order to meet the user requirements. In another embodiment the method also includes a step of scheduling purchase of the required material resources from outside market. This feature ensures that all necessary steps are taken to achieve a blend that meets the user requirements.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawing.
FIG.1 shows a flowchart containing the steps according to the disclosed method.
FIG.2 displays a sample instance of dependency of stockyard material resources.

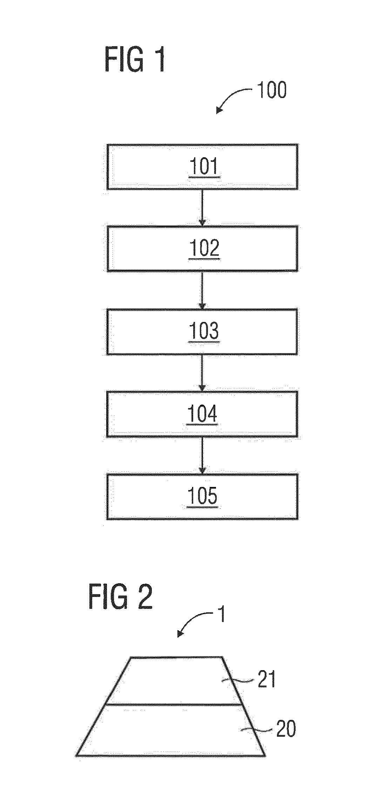

The steps carried out according to the disclosed method 100 are shown in the flowchart of FIG.1. As seen in FIG.1, the method 100 comprises of a few steps to be executed to achieve a blend according to the user requirements. According to the flowchart, the method comprises of a first step 101 of collecting the user requirement. Thereafter a step 102 of assessing stockyard material information is carried out. Next step 103 is of receiving a plant configuration input. After these three inputs have been collected in the three steps 101,102, 103, the next essential step 104 is to estimate if the blend is possible according to the user requirement. The estimate is made based on the user requirement, the stockyard material information and the plant configuration input by applying one or more blend rules. The method finally comprises a step 105 of scheduling reclamation of the stockyard material resources to achieve said blend if the blend is possible.

FIG.2 displays a situation where a stockyard material resource 20 is dependent on another stockyard material resource 21. In this example, the stockyard material resource 20 lying below can be reclaimed by a reclaimer only when at least some portion of the stockyard material resource 21, which is lying above, is reclaimed first. This creates a dependency between the material resource 20 lying below and the material resource 21 lying above. This dependency information for the stockyard material resources 1 forms a part of the stockyard material information.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A method (100) for planning a blend for stockyard material resources (1) in a plant according to a user requirement, the method (100) comprising:
- a step (101) of collecting the user requirement;
- a step (102) of assessing stockyard material information;
- a step (103) of receiving a plant configuration input;
- a step (104) of estimating if the blend is possible based on the user requirement, the stockyard material information and the plant configuration input by applying one or more blend rules;
- a step (105) of scheduling reclamation of the stockyard material resources (1) to achieve said blend if the blend is possible.

2. The method (100) according to any one of the above claims, wherein the user requirement comprises at least one desired quality parameter value and a desired quantity of the stockyard material resources (1).

3. The method (100) according to any one of the above claims, wherein the stockyard material information comprises available stockyard material resource information, quantity information, quality parameter value information, location information and dependency information for the stockyard material resources (1).

4. The method (100) according to any one of the above claims, wherein the plant configuration input comprises a minimum reclaimable quantity of the stockyard material resources by a reclaimer and a location of the reclaimer with respect to the stockyard.

5. The method (100) according to any one of the above claims, wherein if the blend is not possible, the method comprises a step of relaxing the user requirement to achieve a compromised blend.

6. The method (100) according to any one of the above claims, wherein the blend rule further comprises an optimization criteria.

7. The method (100) according to any one of the above claims, wherein the method further comprises a step of displaying a blend result.

8. The method (100) according to any one of the above claims, wherein if the blend is not possible the method further comprises a step of sourcing of stockyard material resources (1) from outside the plant.
